# EUROPEAN PATENT SPECIFICATION

(11) **EP 3 263 252 B1**
(45) Date of publication and mention of the grant of the patent: **27.10.2021**
(21) Application number: 17178053.9
(22) Date of filing: 27.06.2017
(51) Int. Cl.: B23B 31/26, B23B 29/04, B25B 23/10

(54) **OPERATING DEVICE AND ROTATING DEVICE**
BETRIEBSVORRICHTUNG UND DREHVORRICHTUNG
DISPOSITIF DE FONCTIONNEMENT ET DISPOSITIF DE ROTATION

(30) Priority: 01.07.2016 JP 2016131330
(43) Date of publication of application: 03.01.2018
(73) Proprietor: ALPSTOOL CO., LTD., Hanishina-gun, Nagano 389-0601 (JP)
(72) Inventor: KANEKO, Yutaka, Hanishina-gun, Nagano 389-0601 (JP); MIYAIRI, Shuji, Hanishina-gun, Nagano 389-0601 (JP); TANAKA, Masayoshi, Hanishina-gun, Nagano 389-0601 (JP)
(74) Representative: Viering, Jentschura & Partner mbB Patent- und Rechtsanwälte

(56) References cited:
- EP-A1- 2 529 865
- DE-A1-102010 052 884
- JP-U- 3 193 709
- US-A- 4 535 658
- US-A1- 2008 110 305

## Description

### BACKGROUND OF THE INVENTION

### Field of the Invention

The present invention relates to a rotating device and the like adapted to rotate a spindle, and more particularly, to an operating device used to attach and detach a tool unit mounted on the spindle of the rotating device.

### Description of the Related Art

A machine tool such as a combined lathe is equipped with a tool holder which allows a tool unit mounted on a tip side of the spindle to be detachably attached to the tool holder (see Japanese Patent Laid-Open No. 6-238539 and Japanese Utility Model Registration No. 3193709).

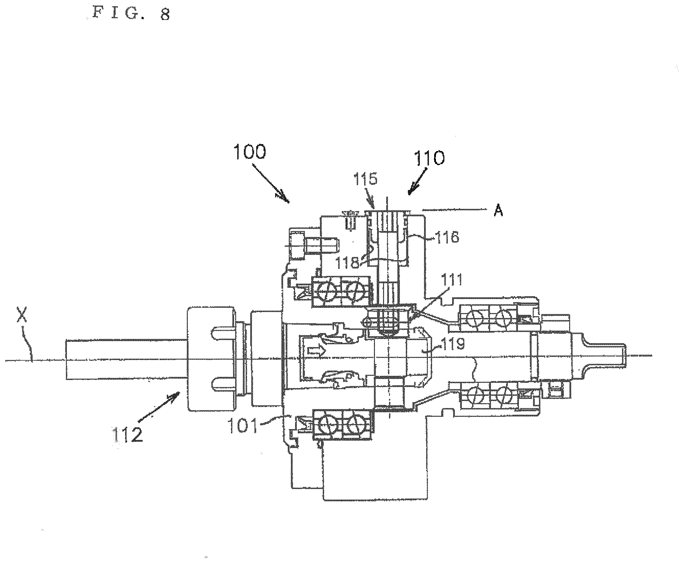

This type of conventional tool holder 100 is equipped with an operating unit 110 rotated with respect to a spindle 101, for example, as shown in FIG. 8. In the operating unit 110, a driver 115 connected to a camshaft 111 is placed in a through-hole 116 at a reference position A separated from the camshaft 111 by being biased upward by a spring 118. To rotate the camshaft 111, an operating tool (not illustrated) for rotation is attached externally to the driver 115 by an operator, the driver 115 is pushed against an elastic force of the spring 118 into an operating position where the driver 115 is connected to the camshaft 111, and the driver 115 is rotated. Then, a rotational impetus produced by the rotation is converted into a rectilinear motion by a draw bar 119 and the camshaft 111 to provide a clamping/unclamping operation performed in attaching/detaching the tool unit 112.

Now, in the conventional tool holder described above, since the operating unit is rotated with respect to the spindle, it is most important for safety that the driver is separated from the camshaft during rotation of the spindle.

Thus, in the conventional tool holder, the driver is biased upward by a spring, and when the operating tool operated by the operator is pulled out, the driver is always held by being separated from the camshaft.

However, in performing clamping/unclamping operation, existence of the spring makes it necessary for the operator to perform a rotating operation by pressing the driver against a reaction force of the spring, which contributes to poor operability.

Also, if the driver fits improperly in the camshaft because of being pushed insufficiently, fitting portions of the driver and camshaft might get deformed, impeding subsequent use.

Also, generally a spring has a strong reaction force, often making it difficult for the operator to push in the driver with one hand, but if the reaction force of the spring is reduced, a force tending to return the driver to the reference position is reduced, which might make it impossible to separate the driver reliably from the camshaft. Also, if the reaction force of the spring is reduced, it is impossible to strengthen the waterproof sealing function which will lower the slidability.

DE 10 2010 052884 A1 discloses an operating device according to the preamble of claim 1.

### SUMMARY OF THE INVENTION

Thus, the present invention has been made in view of the above problems and has an object to provide an operating device and the like which excel in operating efficiency and allow a driver to be separated reliably from a camshaft during rotation of a spindle.

To solve problems in operations, according to a first aspect of the present invention, there is provided an operating device (20) as defined in claim 1.

Also, according to another aspect, the movement restriction device includes a stopper (40) movable in a radial direction of the through-hole; and part of the stopper protrudes outward of the driver at the fixing position and moves inward of the driver at the unfixing position.

Also, according to another aspect, at the unfixing position, part of the stopper is engaged with the operating tool (35) adapted to rotate the driver and causes the driver to be coupled to the operating tool.

Also, according to another aspect, there is provided a rotating device comprising the operating device according any one of the previous aspects.

The present invention allows the tool unit to be attached and detached by a simpler operation. Also, the driver can be separated reliably from the camshaft during rotation of the spindle. Besides, a waterproof effect of the tool holder on the operating unit can be improved.

### BRIEF DESCRIPTION OF THE DRAWINGS

FIG. 1 is a schematic diagram showing a configuration example of a tool holder;
FIGS. 2A is a schematic diagram for illustrating an installation condition and operation example of a driver at a reference position, and is a plan view;
FIGS. 2B is a schematic diagram for illustrating an installation condition and operation example of a driver at a reference position, and is a front view;
FIGS. 3A is a schematic diagram for illustrating an installation condition and operation example of the driver at an operating position, and is a plan view;
FIGS. 3B is a schematic diagram for illustrating an installation condition and operation example of the driver at an operating position, and is a front view;
FIG. 4 is a schematic diagram for illustrating a configuration of a movement restriction mechanism;
FIG. 5 is a schematic diagram for illustrating a cylindrical body mounted on an operating tool;
FIGS. 6A is a schematic diagram for illustrating other embodiments, and is a first embodiment;
FIGS. 6B is a schematic diagram for illustrating other embodiments, and is a second embodiment;
FIGS. 6C is a schematic diagram for illustrating other embodiments, and is a third embodiment;
FIGS. 6D is a schematic diagram for illustrating other embodiments, and is a fourth embodiments;
FIG. 7 is a schematic diagram for illustrating another configuration example of the rotating device; and
FIG. 8 is a schematic diagram for illustrating a configuration example of a conventional tool holder.

### DETAILED DESCRIPTION OF THE PREFERRED EMBODIMENTS

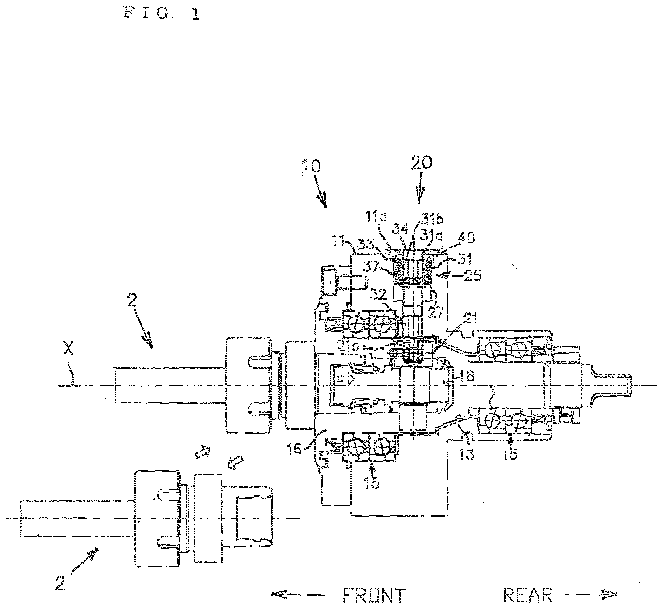

Embodiments of the present invention will be described below with reference to accompanying drawings. Note that in the following description of a tool holder 10, it is assumed for convenience sake that a left-right direction in FIG. 1 corresponds to a forward/backward direction of the tool holder 10 while an up/down direction corresponds to an up/down direction of the tool holder 10. Also, in the following description, an act of mounting a tool unit 2 on the tool holder 10 is referred to as "clamping" and an act of removing the tool unit 2 from the tool holder 10 is referred to as "unclamping".

The tool holder 10 according to the present embodiment is mounted, for example, on a machine tool such as a combined lathe although not illustrated, and functions as a mounting used to attach and detach the tool unit 2. The tool unit 2 is mounted on the tool holder 10 by being selected from plural types of tool unit 2 functioning as a cutting tool, where the tool unit 2 is selected according to a workpiece to be cut. Note that machine tools are conventionally well-known, and thus detailed description thereof will be omitted.

As shown in FIG. 1, the tool holder 10 includes a main body 11 provided with a bore 13 penetrating the main body 11 along an axis line X, and a spindle 16 is installed rotatably in the bore 13 via a bearing 15. The tool unit 2 is clamped via a draw bar 18 in a forward part of the bore 13 and rotationally driven by a driving force of a rotational drive unit (not illustrated) transmitted to the tool unit 2 via the spindle 16.

The main body 11 is equipped with an operating unit 20 (operating device according to the present invention) used to clamp and unclamp the tool unit 2. The operating unit 20 includes a camshaft 21 and a driver 25, where the camshaft 21 is placed inside the spindle 16 and rotated with respect to the spindle 16 and the driver 25 is used to rotate the camshaft 21, the spindle 16 intersecting a through-hole 27 formed extending inward from an outer circumferential surface of the main body 11. Also, the draw bar 18 is mounted on the camshaft 21 by penetrating a cam provided on the camshaft 21. This makes it possible to convert a rotary motion of the camshaft 21 into a rectilinear motion of the draw bar 18,

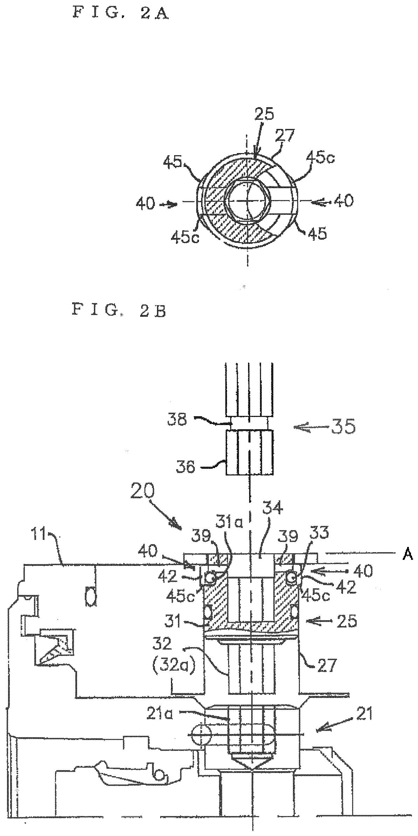

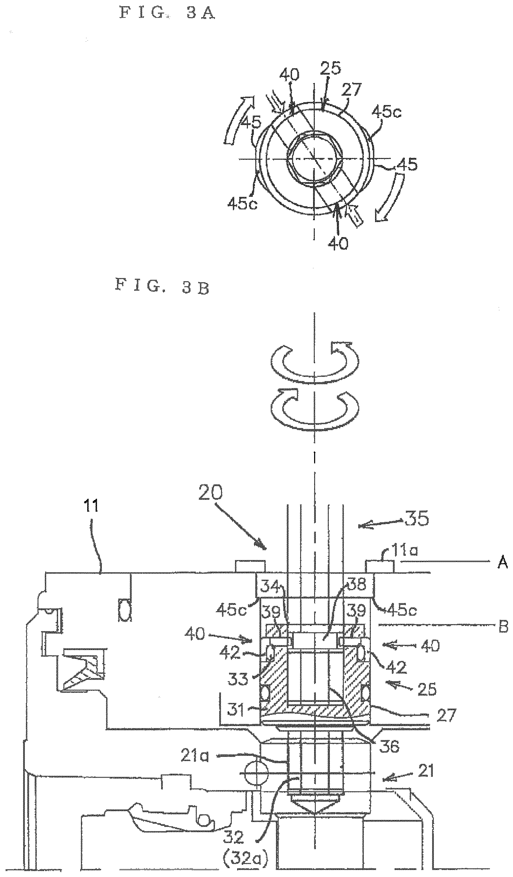

As shown in FIGS. 2 and 3, the driver 25 is placed in the through-hole 27 formed extending from an outer circumferential surface of the main body 11 toward one end of the camshaft 21, in such a way as to be able to reciprocate along the through-hole 27 between the reference position A (FIG. 2) where the driver 25 is separated from the camshaft 21 and an operating position B (FIG. 3) where the driver 25 is connected to the camshaft 21 to rotate the camshaft 21.

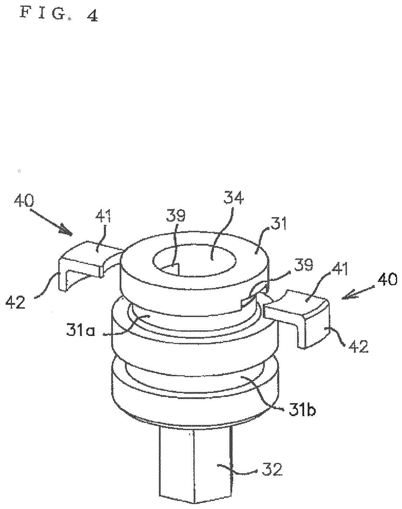

As shown in FIG. 4, the driver 25 includes a driver body 31 provided with an outside diameter approximately equal to an inside diameter of the through-hole 27 and configured to be circular in planar view, and a shaft 32 extending in an axial direction of the through-hole 27. The driver 25 is slidable in the through-hole 27 by being held against an inner wall surface of the through-hole 27 by an outer wall surface of the driver body 31.

As shown in FIG. 1, a top face of the driver body 31 protrudes above the main body 11, and a cover 11a is mounted on the top face of the main body 11, covering an outer circumferential edge of the driver body 31 to prevent the driver 25 from protruding above the reference position A.

Two grooves 31a and 31b are formed around an outer wall surface of the driver body 31, each being placed in a vertical direction, and O-rings 33 and 37 are placed in the respective grooves 31a and 31b. The O-ring 33 keeps the driver body 31 in close contact with the through-hole 27 while allowing the driver body 31 to slide up and down in the through-hole 27. Note that the O-ring 37 has a function to prevent infiltration of water and the like into the main body 11.

Also, a recess 34 (insertion recess according to the present invention) is formed in the top face of the driver body 31, extending in the axial direction of the through-hole 27. The recess 34 is shaped to coincide with a nose shape of the operating tool 35 externally connected to the driver body 31 by the operator and is configured to be able to fit over the operating tool 35.

As shown in FIG. 2, the operating tool 35 is, for example, a rod-shaped member provided at a tip with a fitting portion 36 fittable in the recess 34 in the driver body 31. The fitting portion 36, for example, has a hexagonal shape. The driver 25 can be operated by fitting the fitting portion 36 in the recess 34 of the driver body 31 and thereby coupling the operating tool 35 to the driver 25.

Also, a fitting portion 32a fittable in a top face of the camshaft 21 is formed at a lower tip of the shaft 32 of the driver 25. On the other hand, a recess 21a is formed in the top face of the camshaft 21, extending in the axial direction of the through-hole 27. The recess 21a, which coincides in shape with the fitting portion 32a formed on a lower end side of the shaft 32, can be fitted over the fitting portion 32a formed in the shaft 32 of the driver 25. Note that the fitting portion 32a has, for example, a hexagonal shape, but the shape of the fitting portion 32a is not limited in particular.

Then, as shown in FIGS. 1 to 3, the fitting portion 36 of the operating tool 35 is fitted in the recess 34 of the driver body 31, the driver 25 is pushed in the axial direction of the through-hole 27 from the reference position A to the operating position B using the operating tool 35, the fitting portion 32a on the shaft 32 of the driver 25 is fitted in the recess 21a of the camshaft 21, the driver 25 is rotated around the axis of the through-hole 27 through rotating operation of the operating tool 35, the camshaft 21 is rotated around an axis orthogonal to the axis line X, and the draw bar 18 is moved (reciprocated) along the axis line X, thereby clamping/unclamping the tool unit 2.

Also, the driver body 31 is equipped with a movement restriction mechanism adapted to restrict movement of the driver 25. The movement restriction mechanism restricts the movement of the driver 25 at the reference position A and permits movement of the driver 25 when the driver body 31 is rotated.

The movement restriction mechanism includes stoppers 40 and expanded portions 45, where the stoppers 40 are movable in a radial direction of the through-hole 27 in the main body 11 by being inserted into stopper insertion holes 39 formed by penetrating horizontally from the outer wall surface of the driver body 31 toward the recess 34, the expanded portions 45 are formed on the inner wall surface of the through-hole 27 by expanding the inside diameter of the through-hole 27 and protruding in the radial direction, and the movement of the driver 25 is blocked when part of the stoppers 40 are engaged with the expanded portions 45 (see FIG. 2B).

As shown in FIG. 4, the stoppers 40 are, for example, flat-plate substantially L-shaped members each made up of a horizontal portion 41 extending in a horizontal direction and a vertical portion 42 extending vertically downward from one outer end of the horizontal portion 41. The horizontal portions 41 are inserted into the stopper insertion holes 39, and as shown in FIGS. 1 to 3, the vertical portions 42 are placed on an outer side of the O-ring 33 placed in the upper groove 31a formed in the outer wall surface of the driver body 31.

Note that although in the present embodiment, the O-ring 33 is placed below the horizontal portions 41 of the stoppers 40, the vertical portions 42 may be formed extending vertically upward from the horizontal portions 41 to place the O-ring 33 above the horizontal portions 41.

The horizontal portions 41 are approximately equal in length to the stopper insertion holes 39, and are set to such a length that the horizontal portions 41 will not be exposed to the recess 34 in the driver body 31 when the stoppers 40 are placed on the outer side of the O-ring 33 and that tips will protrude into the recess 34 when the O-ring 33 is deformed, causing the stoppers 40 to move inward.

On the other hand, as shown in FIG. 2A, the expanded portions 45 formed in the through-hole 27 in the main body 11 are formed by protruding circumferential portions of the through-hole 27 outward for a larger width, where the circumferential portions serve as space regions configured to accept part of the vertical portions 42 of the stoppers 40. An inner wall surface running from a center of the expanded portions 45 toward opposite ends is formed into a curved shape such that a distance from a center of the through-hole 27 will decrease gradually. Preferably, a bottom 45c of each expanded portion 45 is formed into a planar shape to make the vertical portions 42 less liable to move.

Although the inner wall surface running from the center of each of the expanded portions 45 toward the opposite ends is formed into a curved shape, this is to guide the stoppers 40 smoothly inward, and the inner wall surface may be formed into a flat or other shape.

Then, as shown in FIG. 3, through horizontal rotating operation of the driver 25, the vertical portions 42 of the stoppers 40 move inward by squeezing the O-ring 33 along the inner wall surface from the center of the expanded portions 45 toward end portions.

Therefore, when rotated around the axis of the through-hole 27, the driver 25 is blocked from moving in the through-hole 27 while the vertical portions 42 of the stoppers 40 functioning as the fixing position at which the driver 25 is fixed by the stoppers 40 is located in the expanded portions 45. When the stoppers 40 move inward and while the vertical portions 42 of the stoppers 40 functioning as the unfixing position at which the driver 25 is unfixed is located beyond lateral ends of the expanded portions 45 (outside the expanded portions 45), the vertical portions 42 of the stoppers 40 fit inside the through-hole 27, and thus the driver 25 is permitted to move inside the through-hole 27,

Also, the tool holder 10 according to the present embodiment is provided with a retention mechanism adapted to prevent the operating tool 35 from coming out of the recess 34 formed in the top face of the driver body 31 while the driver 25 is permitted to move.

As shown in FIG. 2, the retention mechanism includes a groove portion 38 formed such that an outer circumferential surface of the operating tool 35 will be partially reduced in size inward, and the horizontal portions 41 of the stoppers 40 inserted in the groove portion 38. As shown in FIG. 3A, the groove portion 38 is formed at such a position as to face the through-hole 27 in the main body 11 when the operating tool 35 at the reference position A is coupled to the recess 34 in the driver body 31.

As shown in FIG. 2B, when the O-ring 33 is not squeezed by the vertical portions 42, inside ends of the horizontal portions 41 of the stoppers 40 are placed in the stopper insertion holes 39 to such an extent as not to be exposed to the recess 34 in the driver body 31. When the vertical portions 42 fit inside the through-hole 27 in the main body 11 by squeezing the O-ring 33, as shown in FIG. 3B, the inside ends of the horizontal portions 41 get exposed to (protrude into) the recess 34 in the driver body 31 and get engaged with the groove portion 38 formed in the operating tool 35.

Therefore, as shown in FIG. 2, when the driver 25 is at the reference position A, the operating tool 35 is pluggable/unpluggable, but when the driver 25 can be moved (when the driver 25 is placed between the reference position A and operating position B), as shown in FIG. 3, tips of the horizontal portions 41 of the stoppers 40 are inserted into the groove portion 38 formed in the operating tool 35, coupling the operating tool 35 to the driver 25, and consequently the operating tool 35 cannot be removed from the recess 34 in the driver body 31. Thus, in pulling up the driver 25 from the operating position B to the reference position A, it is possible to prevent the operating tool 35 from coming out of the recess 34 and reciprocate the driver 25 reliably between the reference position A and operating position B.

In the tool holder 10 according to the present embodiment, the expanded portions 45 are placed symmetrically with respect to the center of the through-hole 27 in the main body 11 in planar view, the stopper insertion holes 39 in the driver body 31 are also placed symmetrically with respect to a center of the driver body 31 in planar view, and the stoppers 40 are also placed according to the number of stopper insertion holes 39.

Although two expanded portions 45 are provided in the tool holder 10 according to the present embodiment in this way, for example, four expanded portions 45 may be provided at 90-degree intervals around the axis of the through-hole 27 in the main body 11 with stopper insertion holes 39 and stoppers 40 provided in a similar manner. In this way, placement locations and the number of the expanded portions 45 are not limited to those according to the embodiment, but preferably the expanded portions 45 are provided at equal intervals around the axis of the through-hole 27 in the main body 11.

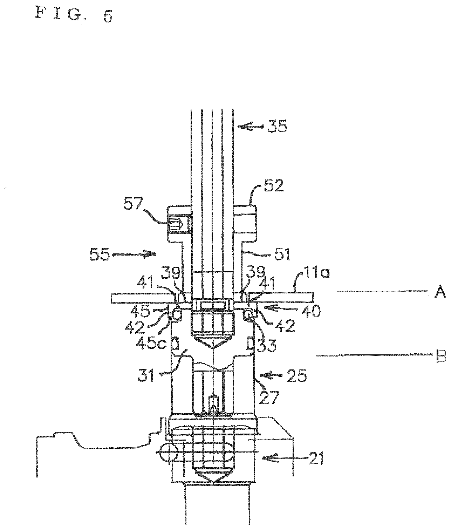

Also, as shown in FIG. 5, in the tool holder 10 according to the present embodiment, the operating tool 35 operated by the operator is equipped with an adjuster used to adjust pushing depth of the operating tool 35. The adjuster, which includes a two-stage cylindrical body 55 made up of a first cylindrical portion 51 and second cylindrical portion 52 formed into a substantially flange shape, is detachably attached to an outer circumferential surface of the operating tool 35 with a fixing member 57 such as a fixing screw.

Preferably an inner wall surface of the cylindrical body 55 coincides in shape with the outer circumferential surface of the operating tool 35, but does not necessarily need to have an identical shape as long as the cylindrical body 55 can be fastened securely with a fixing member 57 such as a fixing screw.

Also, in mounting the cylindrical body 55 on the operating tool 35, length from a tip of the operating tool 35 to a lower end of the first cylindrical portion 51 is adjusted such that the horizontal portions 41 of the stoppers 40 and the groove portion 38 formed in the operating tool 35 will be flush with each other on a horizontal plane when the operating tool 35 is mounted on the driver body 31.

Also, when the driver 25 is pushed in, because an end face of the first cylindrical portion 51 is pushed in contact with the upper end face of the driver body 31, the driver body 31 can be pushed in without any large load being applied to the stoppers 40.

Also, the first cylindrical portion 51 is designed to coincide in length to a distance from the reference position A to the operating position B. Consequently, when the driver 25 is pushed into the operating position B, because a lower end face of the second cylindrical portion 52 comes into contact with the cover 11a, it is possible to visually check whether or not the driver 25 has been pushed in reliably to the operating position B. Also, the second cylindrical portion 52 functions as a knob for use to pull up the operating tool 35.

Note that the cylindrical body 55 may be formed integrally with the operating tool 35, but is preferably produced as a separate body when machining errors and machining costs of the parts are considered.

Next, an operation example of an operating unit mounted on the tool holder according to the present embodiment will be described with reference to FIGS. 2 to 4.

First, as shown in FIG. 2, the fitting portion 36 of the operating tool 35 is inserted into the recess 34 in the driver body 31 at the reference position A.

In so doing, the operating tool 35 can be freely plugged and unplugged. When the operating tool 35 is pluggable/unpluggable, the movement of the driver 25 is blocked by the stoppers 40. Specifically, part of the vertical portions 42 of the stoppers 40 are placed by protruding into the expanded portions 45 formed in the through-hole 27 in the main body 11, thereby blocking downward movement of the driver 25.

Next, as shown in FIG. 3, using the operating tool 35, the driver 25 is rotated around the axis of the through-hole 27 until the vertical portions 42 of the stoppers 40 move out of their regions along inner walls of the expanded portions 45.

In so doing, the vertical portions 42 of the stoppers 40 move inward while squeezing the 0-ring 33 by means of pressing forces from inner wall surfaces of the expanded portions 45 and are placed inside the through-hole 27 in the main body 11 after passing through ends of the expanded portions 45 as shown in FIG. 3B, and thus are permitted to move below the driver 25.

Also, when the stoppers 40 are moved inward, tips of the horizontal portions 41 of the stoppers 40 protrude into the recess 34 in the driver body 31, getting engaged with the groove portion 38 of the operating tool 35. Consequently, the operating tool 35 is coupled to the driver 25, disabling the operating tool 35 from being removed from the recess 34 in the driver body 31. This makes it easy to maintain a coupled state between the operating tool 35 and driver body 31, making it possible to easily prevent the operating tool 35 from coming out and thereby improve operability.

Note that the driver 25 can be moved by moving the operating tool 35 downward.

Next, using the operating tool 35, the driver 25 is pushed in to the operating position B and rotated around the axis of the through-hole 27 and the draw bar 18 is moved in the axial direction to perform clamping/unclamping operation.

Also, according to the present embodiment, because the cylindrical body 55 is provided on the operating tool 35 as shown in FIG. 5, the driver 25 can be pushed in reliably to the operating position B by simply being pushed in until the lower end face of the second cylindrical portion 52 comes into contact with the cover 11a, and thus operability can be improved.

After the clamping/unclamping operation, the driver 25 is pulled up from the operating position B to the reference position A using the operating tool 35. Note that since the operating tool 35 is prevented from coming out of the recess 34 by the retention mechanism when the driver 25 is located between the reference position A and operating position B, the operating tool 35 according to the present embodiment can pull up the driver 25 reliably to the reference position A. Also, by being pulled up until coming into contact with the cover 11a mounted on the main body 11, the driver 25 is positioned accurately at the reference position A.

Then, at the reference position A, the driver 25 is rotated using the operating tool 35 until the vertical portions 42 of the stoppers 40 are placed at the expanded portions 45. As a result of the rotating operation, the stoppers move outward, causing the horizontal portions 41 of the stoppers 40 to get separated from the groove portion 38 of the operating tool 35. Consequently, the operating tool 35 becomes pluggable/unpluggable, and when the operating tool 35 is removed from the recess 34 in the driver body 31, the process is finished.

In this way, the tool holder 10 according to the present embodiment, allows clamping/unclamping operation to be performed simply. Also, once an operation process of the operating unit 20 is started, the operating tool 35 remains coupled and unremovable until the operation process is finished, and thus the driver 25 can reliably be separated from the spindle 16.

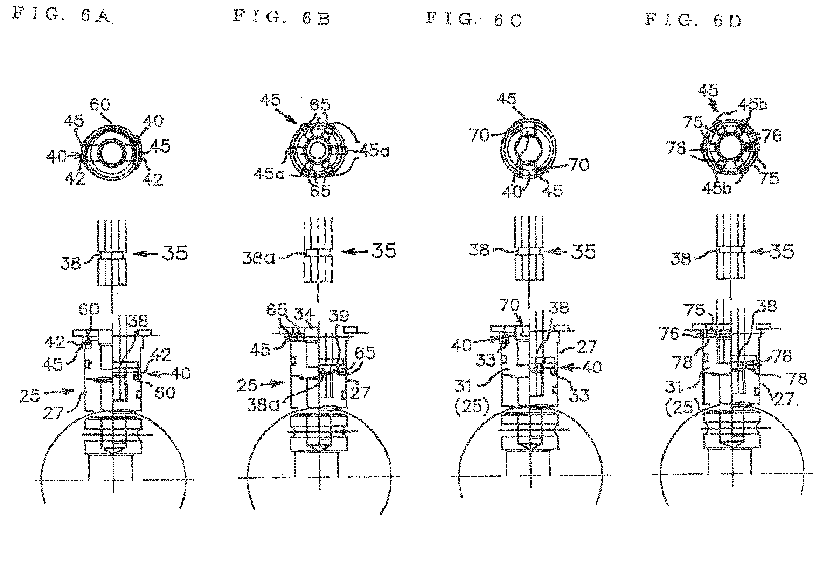

Next, other embodiments of the driver 25 of the operating unit 20 will be described with reference to FIG. 6, In each sub-figure of FIG. 6, the left half shows the reference position A and the right half shows the operating position B.

Whereas the driver 25 according to the above embodiment has the O-ring 33 inside the stoppers 40, the embodiment in FIG. 6A differs in that a snap ring 60 is used instead of the O-ring 33.

The snap ring 60 is a substantially C-shaped elastic member and when opposite ends of the snap ring 60 are engaged with each other while forcing open the vertical portions 42 of the stoppers 40, the vertical portions 42 protrude outward and are held by the expanded portions 45, thereby blocking the movement of the driver 25. On the other hand, as the driver 25 rotates, the opposite ends of the snap ring 60 are elastically deformed by being pressed inward by the inner wall surfaces of the expanded portions 45, and consequently the stoppers 40 move inward, causing the vertical portions 42 to fit inside the through-hole 27 in the main body 11 and thereby permitting the driver 25 to move.

Also, an embodiment in FIG. 6B differs in that two spherical bodies 65 are used instead of the stoppers 40.

Steel balls are used as the spherical bodies 65, but desirably balls made of nylon, rubber, or the like having elasticity are used. Also, since the spherical bodies 65 are used, the stopper insertion holes 39 are changed to round holes in terms of shape and round-hole fall prevention retainers (not illustrated) are formed at inside ends of the stopper insertion holes 39 to prevent falls into the recess 34. Also, a groove portion 38a formed in the operating tool 35 may have a curved surface corresponding to outer circumferential surfaces of the spherical bodies 65.

Furthermore, in an expanded portion 45, plural expanded portions 45a with a radius equal to or larger than an equatorial radius of the spherical bodies 65 are provided at equal intervals around the axis of the through-hole 27 in the main body 11,

With the movement restriction mechanism which is configured in this way, at the reference position A, part of each spherical body 65 is placed protruding outward and held by the expanded portion 45, thereby blocking the movement of the driver 25. On the other hand, as the driver 25 rotates, the spherical bodies 65 move inward while being deformed elastically by being pressed inward by the inner wall surfaces of the expanded portion 45, and fit inside the through-hole 27 in the main body 11, thereby permitting the driver 25 to move. Note that the number of spherical bodies is changed appropriately at a design stage.

Also, an embodiment in FIG. 6C differs in that the stopper insertion holes 39 are formed into groove portions 70 of a T-slot shape by cutting in the axial direction from the top face of the driver body 31. This makes it possible to easily form the stopper insertion holes 39 and easily reduce production costs.

Note that the snap ring 60 shown in FIG. 6A can be used in the embodiment of FIG. 6C instead of the O-ring 33.

Also, the embodiment in FIG. 6D differs in that a compression coil spring 75 is used instead of the O-ring 33 while stepped stopper pins 76 are used instead of the stoppers 40. Note that the stopper insertion holes 39 are changed to stepped round holes 78 in terms of shape and designed not to protrude too much into the recess 34. In an expanded portion 45, plural expanded portions 45b which nearly coincide with outside shape of the stopper pins 76 are provided at equal intervals around the axis of the through-hole 27 in the main body 11.

With the driver 25 which is configured in this way, by being forced open by the compression coil spring 75, the stopper pins 76 protrude outward and are held by the expanded portions 45, thereby blocking the movement of the driver 25. On the other hand, as the driver body 31 rotates, the compression coil spring 75 is elastically deformed by being pressed inward by the inner wall surfaces of the expanded portions 45, and consequently the stopper pins 76 move inward and fit inside the through-hole 27 in the main body 11, thereby permitting the driver 25 to move.

As shown in the additional embodiments described above, the number of stopper 40 can be increased and the shape of the stoppers 40 can be changed as appropriate.

As described above, the operating unit 20 of the tool holder 10 according to the present embodiment, provides good operability because the movement of the driver 25 is blocked at the reference position A and the movement of the driver 25 can be permitted simply by rotating the driver 25. Also, while the driver 25 is permitted to move, the operating tool 35 coupled to the driver 25 cannot be removed. Therefore, the operating tool 35 is not removed at the operating position B, and is removed only at the reference position A without exception. Thus, during rotation of the spindle 16, the driver body 31 is always separated from the camshaft 21, ensuring safety.

Note that the present invention is not limited to the present embodiment, and may be implemented in various forms.

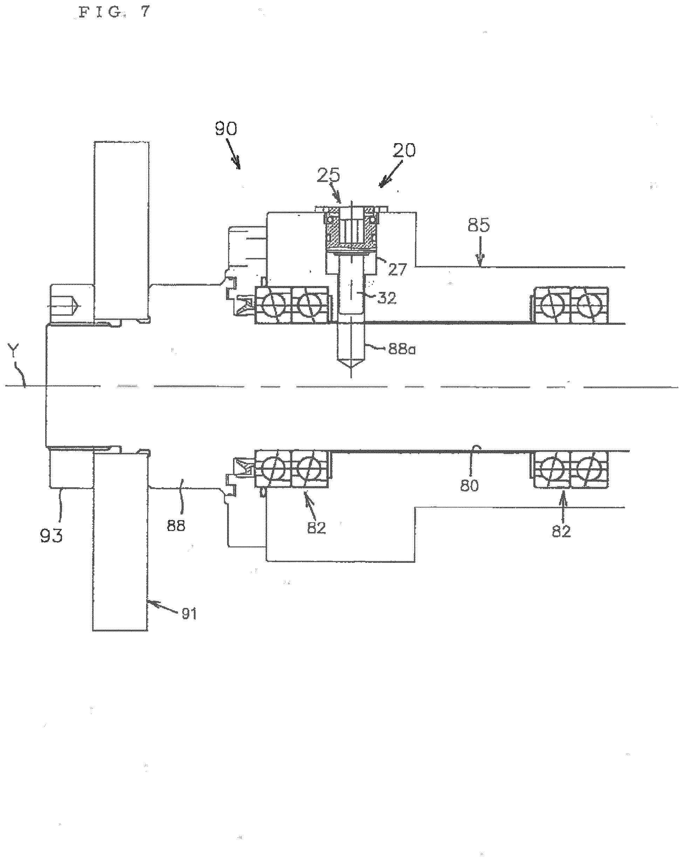

For example, the operating unit 20 according to the present embodiment is attached not exclusively to the tool holder 10, but can be attached to rotating devices of various machine tools. Examples of the rotating device include a grinding wheel rotating device 90 to which the operating unit 20 is applicable and the operating unit 20 is mounted as an operating device for a whirl-stop for the spindle 88 on the grinding wheel rotating device 90 as shown in FIG. 7.

The operating unit 20 is as described above, and thus detailed description thereof will be omitted. Also, the operating tool 35 is mounted on the driver 25 of the operating unit 20 from outside as described above although not illustrated and the driver 25 is operated via the operating tool 35. The operating unit 20 according to the present embodiment differs in that the driver 25 is not used for rotating operation, but is the same in that an operation of moving the driver 25 from a predetermined reference position to an operating position is performed reliably.

The driver 25 of the operating unit 20 according to the present embodiment is mounted in the through-hole 27 in such a way as to be able to reciprocate between the reference position at which the shaft 32 is separated from a hole 88a formed in the spindle 88 and the operating position at which the shaft 32 is inserted into the hole 88a.

Specifically, the grinding wheel rotating device 90 includes a main body 85 provided with a bore 80 penetrating the main body 85 along an axis line Y, and a spindle 88 is installed rotatably in the bore 80 via a bearing 82. A grinding wheel 91 formed into an annular shape is held at a tip of the spindle 88 by being sandwiched between the spindle 88 and a lock nut 93,

The operating unit 20 used for whirl-stop operation of the spindle 88 is provided on the main body 85. The operating unit 20 includes the driver 25 whose shaft 32 is inserted into the hole 88a placed inside the spindle 88 intersecting the through-hole 27 formed extending inward from an outer circumferential surface of the main body 85.

Then, via operation of an operating tool (not illustrated), the driver 25 is pushed in from the reference position to the operating position and the shaft 32 of the driver 25 is held in the hole 88a, making it possible to stop rotation of the spindle 88 and perform a replacement operation of the grinding wheel 91. The grinding wheel replacement operation is performed, for example, as follows: after the rotation of the spindle 88 is stopped by holding the shaft 32 of the driver 25 in the hole 88a, the grinding wheel 91 is replaced by unfastening the lock nut 93, and then the lock nut 93 is fastened. After the replacement operation is finished, the driver 25 is pulled up by the operating tool. The operating tool can be removed at the reference position A to which the driver 25 is pulled up.

Also, although in the present embodiment, the retention mechanism is configured by forming the groove portion 38 in the operating tool 35 such that the horizontal portions 41 of the stoppers 40 will be engaged with the groove portion 38, the present invention is not limited to this form, and any form may be used as long as the operating tool can be kept from falling out of the recess when the driver is located between the reference position A and operating position B.

Also, although in the present embodiment, the inner wall surface of each of the expanded portions is formed into a curved shape, the shape is not limited, and may be simply a flat inclined plane. Also, the shape of the fitting portion is not limited to a hexagonal shape, and may be a circular or, for example, elliptical or substantially polygonal (triangular, quadrangular, or octagonal) shape.

### Description of Symbols

- A: Reference position
- B: Operating position
- 10: Tool holder
- 16: Spindle
- 20: Operating unit
- 25: Driver
- 27: Through-hole
- 35: Operating tool
- 40: Stopper

## Claims

1. An operating device (20) in which a driver operating tool (35) can be mounted from outside, comprising a driver (25) movable in an axial direction of the driver (25) in a through-hole (27) of a main body (11) and rotatable around an axis of the through-hole (27) along with a rotating operation of the operating tool (35), wherein the driver (25) can be rotated with respect to a spindle (16) by being pushed in from a reference position (A) to an operating position (B), the operating device (20) being **characterized by** comprising
a movement restriction device (42) adapted to restrict axial movement of the driver (25) by moving the driver by the rotating operation of the operating tool between a fixing position where the axial movement of the driver (25) is blocked at the reference position and an unfixing position where the restriction on the axial movement of the driver (25) is removed.

2. The operating device (20) according to claim 1, wherein the operating device (20) is provided with an insertion recess (34) which allows insertion of a driver operating tool (35), and a retention device (38, 41) adapted to prevent the operating tool (35) from falling out of the insertion recess (34) when the driver (25) is placed between the reference position (A) and the operating position (B).

3. The operating device (20) according to claim 1 or 2, wherein:
the movement restriction device (42) includes a stopper (40) movable in a radial direction of the through-hole (27); and
part of the stopper (40) protrudes outward of the driver (25) at the fixing position and moves inward of the driver (25) at the unfixing position.

4. The operating device (20) according to claim 3, wherein at the unfixing position, part of the stopper (40) is engaged with the operating tool (35) adapted to rotate the driver (25) and causes the driver (25) to be coupled to the operating tool (35) .

5. A rotating device comprising the operating device (20) according any one of claims 1 to 4.

## Patentansprüche

1. Betätigungsvorrichtung (20), bei welcher ein Treiber-Betätigungswerkzeug (35) von außen montiert werden kann, aufweisend einen Treiber (25), welcher in einer axialen Richtung des Treibers (25) in einem Durchgangsloch (27) eines Hauptkörpers (11) bewegbar und um eine Achse des Durchgangslochs (27) im Zusammenhang mit einer Drehbetätigung des Betätigungswerkzeugs (35) drehbar ist, wobei der Treiber (25) in Bezug auf eine Spindel (16) gedreht werden kann, indem er von einer Referenzposition (A) aus in eine Betätigungsposition (B) eingeschoben wird, wobei die Betätigungsvorrichtung (20) **dadurch gekennzeichnet ist, dass** sie eine Bewegungsbegrenzungsvorrichtung (42) aufweist, welche eingerichtet ist zum Begrenzen der axialen Bewegung des Treibers (25) bei Bewegen des Treibers mittels der Drehbetätigung des Betätigungswerkzeugs zwischen einer Fixierposition, in welcher die axiale Bewegung des Treibers (25) an der Referenzposition blockiert ist, und einer Freigabeposition, in welcher die Begrenzung der axialen Bewegung des Treibers (25) aufgehoben ist.

2. Betätigungsvorrichtung (20) gemäß Anspruch 1, wobei die Betätigungsvorrichtung (20) mit einer Einführungsaussparung (34), welche eine Einführung eines Treiber-Betätigungswerkzeugs (35) ermöglicht, und einer Beibehaltungsvorrichtung (38, 41) vorgesehen ist, welche eingerichtet ist zum Verhindern, dass das Betätigungswerkzeugs (35) aus der Einführungsaussparung (34) herausfällt, wenn der Treiber (25) zwischen der Referenzposition (A) und der Betätigungsposition (B) angeordnet ist.

3. Betätigungsvorrichtung (20) gemäß Anspruch 1 oder 2, wobei:
die Bewegungsbegrenzungsvorrichtung (42) einen Stopper (40) aufweist, welcher in einer radialen Richtung des Durchgangslochs (27) bewegbar ist, und
ein Teil des Stoppers (40) in der Fixierposition aus dem Treiber (25) herausragt und sich in der Freigabeposition in den Treibers (25) hinein bewegt.

4. Betätigungsvorrichtung (20) gemäß Anspruch 3,
wobei in der Freigabeposition ein Teil des Stoppers (40) mit dem Betätigungswerkzeug (35) in Eingriff steht, welches eingerichtet ist zum Drehen des Treibers (25), und bewirkt, dass der Treiber (25) mit dem Betätigungswerkzeug (35) gekoppelt wird.

5. Drehvorrichtung aufweisend die Betätigungsvorrichtung (20) gemäß einem der Ansprüche 1 bis 4.

## Revendications

1. Dispositif d'actionnement (20) dans lequel un outil d'actionnement de dispositif d'entraînement (35) peut être monté à partir de l'extérieur, comprenant un dispositif d'entraînement (25) mobile dans une direction axiale du dispositif d'entraînement (25) dans un trou traversant (27) d'un corps principal (11), et pouvant tourner autour d'un axe du trou traversant (27) en même temps qu'une opération de rotation de l'outil d'actionnement (35), dans lequel le dispositif d'entraînement (25) peut être tourné par rapport à une broche(16) en étant poussé à partir d'une position de référence (A) vers une position d'actionnement (B), le dispositif d'actionnement (20) étant **caractérisé en ce qu'**il comprend
un dispositif de limitation de déplacement (42) adapté pour limiter un déplacement axial du dispositif d'entraînement (25) en déplaçant le dispositif d'entraînement par une opération de rotation de l'outil d'actionnement entre une position fixe où le déplacement axial du dispositif d'entraînement (25) est bloqué au niveau de la position de référence, et une position de détachement où la restriction sur le déplacement axial du dispositif d'entraînement (25) est retirée.

2. Dispositif d'actionnement (20) selon la revendication 1, dans lequel le dispositif d'actionnement (20) est doté d'un renfoncement d'insertion (34) qui permet l'insertion d'un outil d'actionnement de dispositif d'entraînement (35), et un dispositif de retenue (38, 41) adapté pour empêcher l'outil d'actionnement (35) de tomber hors du renfoncement d'insertion (34) lorsque le dispositif d'entraînement (25) est placé entre la position de référence (A) et la position d'actionnement (B).

3. Dispositif d'actionnement (20) selon la revendication 1 ou 2, dans lequel :
le dispositif de limitation de déplacement (42) comprend un dispositif d'arrêt (40) mobile dans une direction radiale du trou traversant (27) ; et
une partie du dispositif d'arrêt (40) fait saillie vers l'extérieur du dispositif d'entraînement (25) au niveau de la position de fixation, et se déplace à l'intérieur du dispositif d'entraînement (25) au niveau de la position de non fixation.

4. Dispositif d'actionnement (20) selon la revendication 3, dans lequel, au niveau de la position de non fixation, une partie du dispositif d'arrêt (40) est mise en prise avec l'outil d'actionnement (35) de façon à faire tourner le dispositif d'entraînement (25) et à provoquer l'accouplement du dispositif d'entraînement (25) avec l'outil d'actionnement (35).

5. Dispositif de mise en rotation comprenant le dispositif d'actionnement (20) selon l'une quelconque des revendications 1 à 4.
